# EUROPEAN PATENT APPLICATION

(11) **EP 4 342 699 A1**
(43) Date of publication of application: **27.03.2024**
(21) Application number: 21940175.9
(22) Date of filing: 20.05.2021
(51) Int. Cl.: B60H 1/34, F24F 13/14

(54) **AIR CONDITIONING AIR OUTLET APPARATUS AND AUTOMOBILE**

(71) Applicant: Zhejiang Smart Intelligence Technology Co., Ltd., Ningbo, Zhejiang 315336 (CN)
(72) Inventor: CAI, Hongjie, Hangzhou Bay New District Ningbo, Zhejiang 315336 (CN); JIANG, Jian, Hangzhou Bay New District Ningbo, Zhejiang 315336 (CN)
(74) Representative: Zaboliene, Reda
(86) International application number: PCT/CN2021/094925
(87) International publication number: WO 2022/241721

(57) **Abstract**

An air conditioning air outlet apparatus, comprising an air outlet body and a driving assembly (2). The air outlet body comprises a plurality of air outlet regions (1), and each air outlet region (1) among the plurality of air outlet regions (1) is provided with a blade linkage assembly (11). The driving assembly (2) comprises a driving source (21), a main driving unit (22) and auxiliary driving units (23). One end of the main driving unit (22) is connected to the driving source (21), and the other end of the main driving unit (22) is connected to any one blade linkage assembly (11) among the plurality of blade linkage assemblies (11). The main driving unit (22) drives the auxiliary driving units (23) to link, and the auxiliary driving units (23) are linked with the main driving unit (22) to then drive the remaining blade linkage assemblies (11) to move, wherein the remaining blade linkage assemblies (11) are blade linkage assemblies (11) among the plurality of blade linkage assemblies (11) which are not connected to the main driving unit (22). The apparatus may solve the problems in the prior art of blades not having interlinking properties, which makes it impossible to coordinate the air output of multiple air-out regions, an air-out change region after a single adjustment being small, and the air conditioning air coverage range being small. Also relating to an automobile comprising the air conditioning air outlet apparatus.

## Description

### TECHNICAL FIELD

The present application relates to the technical field of air conditioning systems, and in particular to an air conditioning outlet apparatus and an automobile.

### BACKGROUND

An automobile's outlet apparatus is one of important interior components of the automobile, it is usually arranged in the automobile's cabin or at positions obliquely above passenger seats. When the temperature inside the automobile needs to be adjusted, air conditioning can be turned on for cooling or heating, and wind blows out from the outlet of the automobile's air conditioning and brings comfort to passengers inside the automobile.

In an existing automobile's air conditioning outlet, air conditioning fan blades are adjusted by manually moving a shift block, so as to adjust a wind direction and a wind volume of the air conditioning. A matching method for the air outlet is matching through clearance between the fan blades, and there is no linkage between the blades. When adjusting the fan blades, a single adjustment has a small changed air-out region, and a range covered by wind is small.

### SUMMARY OF THE DISCLOSURE

The technical problem to be solved by the present application is that: in the prior art, there is no linkage between blades, it is unable to realize collaborative air-out of multiple air-out regions, a single adjustment has a small changed air-out region, and a range covered by air conditioning wind is small.

In order to solve the problem existing in the prior art, the present application provides an air conditioning outlet apparatus and an automobile.

According to one aspect of the present application, the present application provides an air conditioning outlet apparatus, wherein the air conditioning outlet apparatus comprises an air outlet body and a driving assembly; the air outlet body comprises a plurality of air outlet regions, and each air outlet region of the plurality of air outlet regions is provided with a blade linkage assembly; the driving assembly comprises a driving source, a main driving unit, and auxiliary driving units, one end of the main driving unit is connected to the driving source, and the other end of the main driving unit is connected to any one blade linkage assembly of the plurality of blade linkage assemblies; the main driving unit drives the auxiliary driving units to link, and the auxiliary driving units are linked with the main driving unit and then drive the remained blade linkage assemblies to move, wherein the remained blade linkage assemblies are blade linkage assemblies of the plurality of blade linkage assemblies which are not connected to the main driving unit.

Furthermore, the air outlet body is a fan-shaped structure.

Furthermore, the blade linkage assembly comprises a linkage rod and a plurality of blades, the linkage rod is connected to the plurality of blades respectively.

Furthermore, there is an included angle provided between two adjacent blades.

In an implementable solution, in the blade linkage assembly, an included angle between two blades that are respectively located at two ends of the air outlet body is greater than 5°.

Furthermore, the main driving unit is provided with a main driving shaft, the auxiliary driving unit is provided with an auxiliary driving shaft, the main driving unit is connected to a corresponding blade linkage assembly through the main driving shaft, the auxiliary driving unit is connected to a corresponding blade linkage assembly through the auxiliary driving shaft.

In an implementable solution, both the main driving unit and the auxiliary driving unit are conical teeth structures.

Furthermore, one end of the main driving unit is connected to the driving source, and the other end of the main driving unit is connected to any one blade of the corresponding blade linkage assembly.

Furthermore, one end of the main driving unit is connected to the driving source, and the other end of the main driving unit is connected to the linkage rod of the corresponding blade linkage assembly.

According to another aspect of the present application, an automobile is further provided, the automobile comprises the aforementioned air conditioning outlet apparatus.

The present application realizes linkage adjustment for blades in multiple air outlet regions by linkage among multiple driving units, and solves the problem in the prior art that there is no linkage between blades, it is unable to realize collaborative air-out of multiple air-out regions, a single adjustment has a small changed air-out region, and a range covered by air conditioning wind is small.

### BRIEF DESCRIPTION OF THE DRAWINGS

In order to explain technical solutions of embodiments of the present application more clearly, drawings required to be used in description of the embodiments will be briefly introduced below. It is obvious that the drawings in the following description are only some embodiments of the present application. For those skilled in the art, other drawings can be further obtained according to these drawings on the premise of paying no creative work.

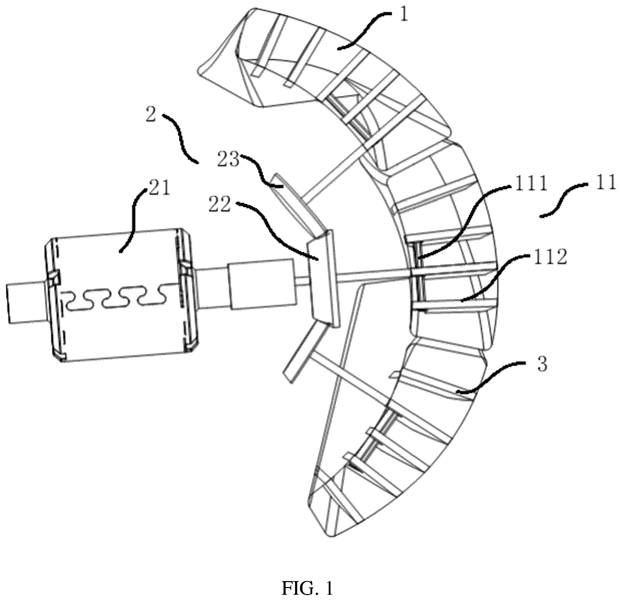

FIG. 1 is a structural schematic view of an air conditioning outlet apparatus of the present application.

In the figure: 1-air outlet region; 11-blade linkage assembly; 111-linkage rod; 112-blade; 2-driving assembly; 21-driving source; 22-main driving unit; 23-auxiliary driving unit; 3-fixing blade.

### DETAILED DESCRIPTION

In order to provide personnel in this technical field with a better understanding of the present application's solution, the technical solutions in the embodiments of the present application will be described clearly and completely below in combination with the drawings in the embodiments of the present application. Obviously, the described embodiments are merely some embodiments of the present application, rather than all embodiments. Based on the embodiments of the present application, any other embodiment obtained by one of ordinary skill in the art on the premise of paying no creative work should belong to the protection scope of the present application.

"An/one embodiment" or "embodiment" herein referred to means a specific feature, structure or feature that can be included in at least one implementation of the present application. In the description of the present application, it should be understood that orientations or position relationships indicated by the terms "up", "top", "bottom", and so on are based on orientations or position relationships shown in the attached drawings, which are only intended to facilitate describing the present application and simplifying the description, rather than indicating or implying that a device or element referred to must have a specific orientation, or be constructed and operated in a specific orientation, and thus should not be understood as any limit to the present application. In addition, the terms "first" and "second" are only used for describing purposes, and should not be understood as indicating or implying relative importance or implicitly indicating the number of indicated technical features. Therefore, the features defined as "first" and "second" can explicitly or implicitly include one or more such features. Moreover, the terms "first", "second" and the like are used to distinguish similar objects, and need not be used to describe a specific sequence or order. It should be understood that data used in this way can be interchanged in appropriate cases, so that the embodiments of the present application described herein can be implemented in order other than those illustrated or described herein.

In order to solve the problem existing in the prior art, the present application provides an air conditioning outlet apparatus and an automobile.

According to one aspect of the present application, the present application provides an air conditioning outlet apparatus, as shown in FIG. 1, the air conditioning outlet apparatus includes an air outlet body and a driving assembly 2; the air outlet body includes a plurality of air outlet regions 1, and each air outlet region 1 of the plurality of air outlet regions 1 is provided with a blade linkage assembly 11; the driving assembly 11 includes a driving source 21, a main driving unit 22, and auxiliary driving units 23, one end of the main driving unit 22 is connected to the driving source 21, and the other end of the main driving unit 22 is connected to any one blade linkage assembly 11 of the plurality of blade linkage assemblies 11; the main driving unit 22 drives the auxiliary driving units 23 to link, and the auxiliary driving units 23 are linked with the main driving unit 22 and then drive the remained blade linkage assemblies 11 to move, wherein the remained blade linkage assemblies 11 are blade linkage assemblies 11 of the plurality of blade linkage assemblies 11 which are not connected to the main driving unit 22. By linkage among multiple driving units, linkage adjustment for blades 112 in multiple air outlet regions 1 is realized, thereby solving the problem in the prior art that there is no linkage between blades 112, it is unable to realize collaborative air-out of multiple air-out regions, a single adjustment has a small changed air-out region, and a range covered by air conditioning wind is small.

Specifically, the main driving unit 22 operates under action of the driving source 21 to drive the blade linkage assembly 11 connected with the main driving unit 22 to move. While the main driving unit 22 operates, the auxiliary driving units 23 linked with the main driving unit 22 are driven to operate, such that the auxiliary driving units 23 drive the blade linkage assemblies 11 connected with the auxiliary driving units 23 to move. It is understandable that driving the blade linkage assemblies 11 to move can mean driving angles of the blades 112 in the blade linkage assemblies 11 to be changed.

Furthermore, the air conditioning outlet apparatus further includes an adjustment button, the adjustment button can be arranged on an automobile, so as to realize that: when a driver or a passenger pressed the adjustment button, based on a preset adjustment instruction, adjustment for the blade linkage assemblies 11 corresponding to the air outlet regions 1 is realized. It can be understood that the preset adjustment instruction can be set based on researched user needs, for example, it is possible that: when the adjustment button is pressed once, angles of the blades of the blade linkage assemblies 11 in the air outlet regions 1 are adjusted to be changed by 1°; when the adjustment button is pressed twice continuously, the angles of the blades 112 of the blade linkage assemblies 11 in the air outlet regions 1 are adjusted to restore. Specific instructions can be set according to requirements, and are not specifically limited here. By setting the adjustment button and presetting the adjustment instruction, users can be enabled to realize air-out adjustment for the air outlet regions 1 after pressing the adjustment button. Realizing automatic air-out adjustment for the air conditioning air outlet regions 1 does not require users to manually stir the blades 112, improving users' experience.

Furthermore, each air outlet region 1 can be provided therein with one blade linkage assembly 11, and can also be provided with multiple blade linkage assemblies 11.

When each air outlet region 1 is provided therein with only one blade linkage assembly 11, the main driving unit 22 and the auxiliary driving units 23 can be all directly connected to the blade linkage assembly 11. Specifically, it will be introduced in combination with FIG. 1.

As shown in FIG. 1, the air outlet body includes three air outlet regions 1, each air outlet region 1 is provided therein with one blade linkage assembly 11, and the three air outlet regions 1 specifically include a first air outlet region, a second air outlet region, and a third air outlet region. Preferably, the first air outlet region is located at an upper position of the air outlet body, and is configured to realize blowing wind into an upper region of a passenger compartment; the second air outlet region is located at a middle position of the air outlet body, and is configured to realize blowing wind into a middle region of a passenger compartment; the third air outlet region is located at a lower position of the air outlet body, and is configured to realize blowing wind into a lower region of a passenger compartment. Furthermore, there is one main driving unit 22, the main driving unit 22 is connected to the blade linkage assembly 11 in the second air outlet region; there are two auxiliary driving units 23, the two auxiliary driving units 23 are respectively connected to the blade linkage assembly 11 in the first air outlet region and the blade linkage assembly 11 in the third air outlet region. Specifically, when the main driving unit 22 is adjusted to work and thereby drive the blade linkage assembly 11 in the second air outlet region to move, the main driving unit 22 will simultaneously drive the auxiliary driving units 23 linked with the main driving unit 22 to work, such that the auxiliary driving units 23 drive the blade linkage assembly 11 in the first air outlet region and the blade linkage assembly 11 in the third air outlet region to move.

It can be understood that the air outlet body including three air outlet regions involved in the above embodiment is only a preferred solution. In other implementable solutions, the air outlet body can also include two air outlet regions, four air outlet regions, five air outlet regions, or air outlet regions with other amounts, which can be specifically set according to actual requirements, and is not specifically limited here.

Furthermore, the blade linkage assembly 11 includes a linkage rod 111 and a plurality of blades 112, the linkage rod 111 is connected to the plurality of blades 112 respectively, and there is an included angle provided between two adjacent blades 112.

In an implementable solution, one end of the main driving unit 22 can be connected to the driving source 21, and the other end of the main driving unit 22 can be connected to any one blade 112 of the corresponding blade linkage assembly 11. One end of the auxiliary driving unit 23 is linked with the main driving unit 22, and the other end of the auxiliary driving unit 23 is connected to any one blade 122 of the corresponding blade linkage assembly 11.

In another implementable solution, one end of the main driving unit 22 can be connected to the driving source 21, and the other end of the main driving unit 22 can be connected to the linkage rod 111 of the corresponding blade linkage assembly 11. One end of the auxiliary driving unit 23 is linked with the main driving unit 22, and the other end of the auxiliary driving unit 23 is connected to the linkage rod 111 of the corresponding blade linkage assembly 11_{∘}

In particular, the action of driving the blade linkage assemblies 11 by the driving units is specifically that: the driving units drive the linkage rods 111 to move, the linkage rods 111 drive the blades 112 connected with the linkage rods 111 to move; alternatively, the driving units drive the blades 112 connected to the driving units to move, the blades drive the linkage rods 111 to move, and thus further drive other blades 112 to move. It can be understood that movements of the blades 112 in the present application can refer to changes of angles of the blades 112. When the blade linkage assembly 11 connected with the main driving unit 22 is driven by the main driving unit 22, the auxiliary driving units 23 are simultaneously driven to drive the blade linkage assemblies 11 connected with the auxiliary driving units 23, such that collaborative air-out of multiple air-out regions is realized, and it is realized that a single adjustment for the blades 112 increases adjustment areas for the air-out regions and increases an air-out coverage range.

It can be understood that the driving unit in the present application refers to the collective term of the main driving unit and the auxiliary driving units.

Furthermore, the air outlet body is a fan-shaped structure, and the blades 112 in the blade linkage assemblies 11 are arranged in intervals to be adapted to the shape of the fan-shaped structure. In the present application, the air outlet body is designed as the fan-shaped structure, compared with rectangular or circular air outlet bodies in the prior art, the air outlet design with the fan-shaped structure in the present application has a high recognition and a strong sense of technology. Moreover, based on the particularity of the arc-shaped shape of the fan-shaped structure, there are components of force in a vertical direction and a horizontal direction. Therefore, when the angles of the blades 112 in the blade linkage assemblies 11 are adjusted to change, a wind direction will change in both the vertical direction and the horizontal direction. Therefore, in the present application, only one layer of blade 112 is required to achieve up and down adjustment and left and right adjustment for the wind direction, without the requirement as that of the prior art, which needs to arrange two layers of blades 112 to adjust the wind direction in the horizontal direction and adjust the wind direction in the vertical direction respectively, such that the space occupied by the air conditioning outlet apparatus on the automobile is reduced.

Furthermore, when each air outlet region 1 is provided therein with a plurality of blade linkage assemblies 11, the main driving unit 22 and the auxiliary driving units 23 can be all connected with multiple blade linkage assemblies 11 in corresponding regions respectively through a connecting member. Preferably, the connecting member can be a tree-like structure, which includes a main connecting rod and a branch connecting rod, the main connecting rod is connected to the main driving unit 22 and the auxiliary driving units 23, one end of the branch connecting rod is connected to the main connecting rod, and the other end of the branch connecting rod is connected to the blade linkage assembly 11. Preferably, there is one main connecting rod, and the number of the branch connecting rods can be specifically set according to the number of the blade linkage assemblies 11 requiring connection. Specifically, when each air outlet region 1 is provided therein with a plurality of blade linkage assemblies 11, the driving principle of the driving units are similar to the above introduction, and is not repeated here.

In an implementable solution, in the blade linkage assembly 11, an included angle between two blades that are respectively located at two ends of the air outlet body is greater than 5°. It can be understood that there is an included angle provided between two adjacent blades 112, the stacked included angle space increases the total angle between the two blades 112 at two ends of the air outlet body, such that the total angle between the two blades 112 at two ends of the air outlet body can be greater than 5°, and an area covered by air conditioning wind is increased.

Furthermore, the main driving unit 22 is provided with a main driving shaft, the auxiliary driving unit 23 is provided with an auxiliary driving shaft, the main driving unit 22 is connected to a corresponding blade linkage assembly 11 through the main driving shaft, the auxiliary driving unit 23 is connected to a corresponding blade linkage assembly 11 through the auxiliary driving shaft. Specifically, when each air outlet region 1 is provided therein with one blade linkage assembly 11, the main driving unit 22 is connected to the linkage rod 111 or the blades 112 of the corresponding blade linkage assembly 11 through the main driving shaft, and the auxiliary driving unit 23 is connected to the linkage rod 111 or the blades 112 of the corresponding blade assembly through the auxiliary driving shaft. When each air outlet region 1 is provided therein with a plurality of blade linkage assembly 11, the main driving unit 22 is connected to the corresponding connecting member through the main driving shaft, and the auxiliary driving unit 23 is connected to the corresponding connecting member through the auxiliary driving shaft.

In an implementable solution, both the main driving unit 22 and the auxiliary driving unit 23 are conical teeth structures. In other implementable solutions, both the main driving unit 22 and the auxiliary driving unit 23 can also be gear structures.

It can be further understood that each air outlet region 1 can be further provided therein with a fixing blade 3, the fixing blade 3 is fixedly connected to the air outlet body. It can be understood that when the air outlet does not need too many blade linkage assemblies 11, it is possible to complement the space of the air outlet region 1 by arranging the fixing blade 3, thereby improving overall aesthetic effect of the air conditioning outlet.

Furthermore, according to another aspect of the present application, an automobile is further provided, the automobile includes the aforementioned air conditioning outlet apparatus.

The above description are only preferred embodiments of the present application, and are not intended to limit the present application. Any modification, equivalent replacement, and improvement made within the spirit and principles of the present application should be included in the protection scope of the present application.

## Claims

1. An air conditioning outlet apparatus, wherein the air conditioning outlet apparatus comprises an air outlet body and a driving assembly (2); the air outlet body comprises a plurality of air outlet regions (1), and each air outlet region (1) of the plurality of air outlet regions (1) is provided with a blade (112) linkage assembly (11); the driving assembly (2) comprises a driving source (21), a main driving unit (22), and auxiliary driving units (23), one end of the main driving unit (22) is connected to the driving source (21), and the other end of the main driving unit (22) is connected to any one blade linkage assembly (11) of the plurality of blade linkage assemblies (11); the main driving unit (22) drives the auxiliary driving units (23) to link, and the auxiliary driving units (23) are linked with the main driving unit (22) and then drive the remained blade linkage assemblies (11) to move, wherein the remained blade linkage assemblies (11) are blade linkage assemblies (11) of the plurality of blade linkage assemblies (11) which are not connected to the main driving unit (22).

2. The air conditioning outlet apparatus according to claim 1, wherein the air outlet body is a fan-shaped structure.

3. The air conditioning outlet apparatus according to claim 1, wherein the blade linkage assembly (11) comprises a linkage rod (111) and a plurality of blades (112), the linkage rod (111) is connected to the plurality of blades (112) respectively.

4. The air conditioning outlet apparatus according to claim 3, wherein there is an included angle provided between two adjacent blades (112).

5. The air conditioning outlet apparatus according to claim 1, wherein in the blade linkage assembly (11), an included angle between two blades (112) that are respectively located at two ends of the air outlet body is greater than 5°.

6. The air conditioning outlet apparatus according to claim 1, wherein the main driving unit (22) is provided with a main driving shaft, the auxiliary driving unit (23) is provided with an auxiliary driving shaft, the main driving unit (22) is connected to a corresponding blade linkage assembly (11) through the main driving shaft, the auxiliary driving unit (23) is connected to a corresponding blade linkage assembly (11) through the auxiliary driving shaft.

7. The air conditioning outlet apparatus according to claim 1 or 6, wherein both the main driving unit (22) and the auxiliary driving unit (23) are conical teeth structures.

8. The air conditioning outlet apparatus according to claim 7, wherein one end of the main driving unit (22) is connected to the driving source (21), and the other end of the main driving unit (22) is connected to any one blade (112) of the corresponding blade linkage assembly (11).

9. The air conditioning outlet apparatus according to claim 7, wherein one end of the main driving unit (22) is connected to the driving source (21), and the other end of the main driving unit (22) is connected to the linkage rod (111) of the corresponding blade linkage assembly (11).

10. An automobile, wherein the automobile comprises the air conditioning outlet apparatus according to any one of claims 1-9.
